# EUROPEAN PATENT SPECIFICATION

(11) **EP 0 746 579 B1**
(45) Date of publication and mention of the grant of the patent: **05.08.1998**
(21) Application number: 94919399.9
(22) Date of filing: 07.06.1994
(51) Int. Cl.: C08G 18/46, C08G 18/73, C08K 5/42, C08L 75/06

(54) **AQUEOUS ANIONIC POLYURETHANE DISPERSIONS**
WÄSSRIGE ANIONISCHE POLYURETHANDISPERSIONEN
DISPERSIONS DE POLYURETHANNE ANIONIQUES, AQUEUSES

(30) Priority: 24.09.1993 US 126508
(43) Date of publication of application: 11.12.1996
(73) Proprietor: H.B. Fuller Licensing & Financing, Inc., St. Paul, Minnesota 55110-5132 (US)
(72) Inventor: DUAN, Youlu Apartment C1009, Minneapolis, MN 55454 (US); DOCHNIAK, Michael, J., St. Paul, MN 55119 (US); STAMMLER, Sonja, Marine On The St. Croix, MN 55047 (US)
(74) Representative: Maiwald, Walter, Dr. Dipl.-Chem.
(86) International application number: US9406406
(87) International publication number: WO9508583

(56) References cited:
- EP-A- 0 537 568
- US-A- 4 108 814
- US-A- 4 110 284
- US-A- 4 385 137
- US-A- 4 870 129
- US-A- 5 001 189
- US-A- 5 334 690

## Description

### Background of the Invention

This invention relates to new aqueous polyurethane dispersions having high crystallization rates, good stability at low pH and high heat resistance. These are important basic properties for improved polyurethane dispersions, particularly for adhesive applications.

### Description of the Prior Art

### A. Sulfonated aqueous polyurethane dispersions

Wolfgang Keberle and Dieter Dieterich, Canadian Pat. 764,009 (July 25, 1967) disclose aqueous polyurethane dispersions prepared from hydroxy-and carboxy-sulphonic acids, aminosulphonic acids, and the hydroxy, mercapto-and amino-carboxylic and sulphonic acids, polycarboxylic and polysulphonic acids include also the addition products (which may be saponified) of unsaturated acids and unsaturated nitriles, of cyclic dicarboxylic acid anhydrides, of sulphocarboxylic acid anhydrides, the addition products of reaction products of olefines with sulphur trioxide such as carbyl sulphate, of epoxypropane-sulphonic acid of sultones such 1,3-propanesultone, 1,4-butanesultone, 1,8-naphthosultone, of disulphonic acid anhydrides to aliphatic and aromatic amines.

Dieter Dieterich and Otto Bayer, U.S.Pat. 3,479,310 (Nov. 18, 1969) disclose aqueous polyurethane dispersions based on hydroxy-and carboxy-sulphonic acids, and aminosulphonic acids as described in Canadian Patent 764,009.

Hans Ludwig Honig, Gerhard Balle, Wolfgang Keberle, and Dieter Dieterich, U.S. Pat. 3,705,164 (Dec.5, 1972) disclose sulfonated aqueous polyurethane dispersions based on mixtures of ethylenediamine and 1,3-propane sultone.

Dieter Lesch and Wolfgang Keberle, Canadian Pat. 928323 ( June 12, 1973) disclose sulfonated aqueous polyurethane dispersions based on the sodium salt of N-(2-aminoethyl)-2-aminoethanesulphonic acid. The patent also relates to a process for preparation of the diamine sulfonate.

It was mentioned in this patent that Belgian Patent Specification No. 673,432 (March,1966) to Keberle et al. discloses sulfonated aqueous polyurethane dispersions based on 2,4 diaminobenzene sulphonic acid. However, the polyurethane dispersions produced from these aromatic diaminosulphonic acids undergo discoloration on exposure to light. It was also mentioned that the process for the preparation of aliphatic diaminosulphonic acids whose salts are suitable for use as anionic structural components for light-fast polyurethane dispersions are already known, these known processes either entail considerable expenditure in apparatus or involve the use of physiologically very dangerous starting materials (reaction of sultone with amines).

Harro Witt and Dieter Dieterich, U.S. Pat. 3,870,684 (Mar. 11, 1975) disclose aqueous polyurethane dispersions based on an adduct of 1,3-propanesultone and ethylenediamine (sultone-diamine adducts are described in German Auslegeschrift No.1,200,318). It also mentioned hydroxy- and carboxy-sulphonic acids, and aminosulphonic acids which described in Canadian Patent 764,009 may be used to prepare aqueous polyurethane dispersions.

Helmut Reiff, Wolfgang Wenzel, Jurgen Grammel, and Dieter Dieterich, U.S. Pat. 4,108,814 (Aug.22, 1978), disclose aqueous polyurethane dispersions based on sulphonate diols have the general formula: 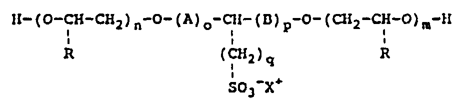 In the examples, the following sulfonated diol and diamine were used to prepare aqueous polyurethane dispersions: (1) Sodium salt of propoxylated 3-hydroxy-2-hydroxymethyl propane-sulphonic acid-1 (molecular weight 428) (AD); and (2) Sodium salt of ethylenediamino-2-ethanesulphonic acid (AAS)

Peter H. Markusch, James W. Rosthauser, and Michael C. Beatty, U.S.Pat. 4,501,852 (Feb.26, 1985), disclose aqueous polyurethane dispersions based on 70% solution in toluene of propoxylated sodium salt of 1,4-dihydroxy-2-butane sulfonic acid having a molecular weight of 430 ("sulfonate diol").

Otto Lorenz, Helmut Reiff, and Dieter Dieterich, Europaische Pat. 0 222 289 A3 (May 21, 1987), used sodium salt of 2-aminoethyl-2 aminoethanesulfonic acid (Na-AAS) and dimethylsulfonate to prepare polyurethane dispersions.

Rudolf Hombach, and Helmut Reiff, U.S.Pat. 4,663,337 (May 5, 1987) used sodium salt of N-(aminoethyl)-aminoethane sulfonic acid to prepare polyurethane dispersions.

Wolfgang Henning, Rudolf Hombach, Walter Mechel, and Manfred Dollhausen, U.S.Pat. 4,870,129 (Sep.26, 1989), used sodium salt of N-(2-aminocthyl)-2-aminoethane sulfonate acid (AAS salt) to prepare polyurethane dispersions. The patent also states "Anionic or potentially anionic starting components include, for example, aliphatic diols containing sulphonate groups according to DE-OS No. 2,446,440 or DE_OS No. 2,437,218, diols and/or diaminosulphonates containing carboxylate groups or groups capable of being converted into carboxylate groups as described in CA-PS 928,323, e.g. the sodium salt of N-(2-aminoethyl)-2-aminoethane sulphonic acid".

Wolfgang Henning, Harald Petersen, and Gerhard Moormann, U.S. Pat. 4,921,842 (May 1, 1990) used a propoxylated adduct of but-2-ene-1,4-diol and NaHSO₃ (Mw 430: 70% in toluene) to prepare polyurethane dispersions. The patent states that "the anionic synthesis components include the aliphatic diols containing sulfonate groups according to DE-OS No. 2,446,440 (U.S. Pat.No.4,108,814) or DE-OS No. 2,437,218, diols and/or diamines containing sulfonate or carboxylate groups or sulfonic or carboxylic acid groups convertible into sulfonate or carboxylate groups of the type described in CA-PS No. 928,323, such as the sodium salt of N-(2-aminoethyl)-2-aminoethane sulfonic acid".

Sven H.Ruetman and Joginder N. Anand, U.S.Pat. 4,895, 894 (Jan. 23, 1990), describe "Illustrative but non-limiting the compounds containing a potential anionic (ionic) group are ... 1,7 dihydroxynaphthalenesulfonic acid-3 (sodium salt, potassium salt, triethylammonium salt),1,8-dihydroxynaphthalenedisulfonic acid-2,4 (sodium salt, potassium salt, triethylammonium salt), 2,4 diaminotoluenesulfonic acid-5 (sodium salt, potassium salt, triethylammonium salt), the sulfonate diols described in U.S. Pat. No. 4,108,814".

Jurgen Fock and Dietmar Schedlitzki, U.S. Patent No. 5,001,189 (March 19, 1991), disclose an aqueous polyurethane dispersion based on a polyol component which is a polyoxyalkylene ether with an average molecular weight of 400 to 10,000 and having at least two terminal hydroxyl groups and at least one -SO₃X group. A sulfonated polyether polyol is disclosed.

### B. Polyurethane Dispersions based on Diisocyanate Mixtures

Wolfgang Henning, Rudolf Hombach, Walter Meckel, and Manfred Dollhausen, U.S.Pat. 4,870,129 (Sep. 26, 1989), disclose polyurethane dispersions based on mixtures of hexamethylene diisocyanate with Q(NCO)₂ in which Q denotes a divalent aliphatic hydrocarbon group with 4-12 carbon atoms or a divalent cycloaliphatic hydrocarbon group with 6-15 carbon atoms.

Herbert Fisch and Lothar Maempel, DE 40 24 567 A1, disclose polyurethane dispersions based on mixtures of hexamethylene diisocyanate and toluene diisocyanate.

Hans Bauriedel, Wolfgang klauck, and Gunther Henke, PCT/EP92/00560 (26/11/92) (DE 40 24567 A1) and (DE 41 09 477 A1) (Sep. 24, 1992) disclose aqueous polyurethane dispersions based on mixture of tetramethylxylylene diisocyanate (TMXDI) with hexamethylene diisocyanate (HDI), isophorone diisocyanate (IPDI), 1,3-xylylene diisocyanate (XDI), 2,2,4-trimethyl-1,6-hexane diisocyanate (TMDI), toluene diisocyanate (TDI), 4,4'-diphenylmethane-diisocyanate (MDI) and dicyclohexylmethane 4,4-diisocyanate (H₁₂MDI).

### C. Crystallization of Polyurethane Dispersions

Lani S. Kangas and Charles W. Stobbie IV, European Pat. 0 344 912 A3 (06/12/1989), disclose moisture curable and hot melt polyurethane based on crystalline or semicrystalline polyester diols having melting points between 30°C and 80°C. The polyurethane composition exhibits improved crystallization rates and posses high green strength.

Palitha K. Abeywardena and Pak T. Leung, WO 92/02568 (Feb.20, 1992), disclose polyurethane dispersions based on a crystalline oligomeric or polymeric polyol.

Dispercoll KA-8464, an aqueous polyurethane dispersion product of Bayer Corporation and Miles (a Bayer USA, Inc. Company), based on HDI and IPDI has a high crystallization rate and stability at low pH levels, but has medium heat resistance. U-42, another Bayer aqueous polyurethane dispersion product has high heat resistance, but a low crystallization rate.

### D. Sulfonated Anionic Polyurethane Dispersions

Helmet Reiff, Wolfgang Wenzel, Jargen GRammel and Dieter Dieterich, U.S. Pat. 4,108,814, disclose the use of sulfonate polyether diols to prepare polyurethane dispersions.

Wolfgang Henning, Rudolf Hanbach, Walter Meckel and Manfred Dollhausen, U.S. Pat. 4,870,129, disclose the use of sulfonate diamine as a chain extender in preparing polyurethane dispersions.

### Summary of the Invention

This invention relates to an improved polyurethane prepolymer and aqueous polyurethane dispersions (PUDs) made therefrom, the dispersions having a high crystallization rate, good quality stability at low pH and high heat resistance. Accordingly, the invention provides aqueous anionic polyurethane dispersions made from a prepolymer which is the reaction product of a sulfonated polyester polyol mixed with dimethylol propionic acid (DMPA), reacted with hexamethylene diisocyanate (HDI) or HDI mixed with tetramethylxylylene diisocyanate (TMXDI) and/or HDI mixed with an aromatic diisocyanate e.g., toluene diisocyanate (TDI), 4,4'-diphenylmethane diisocyanate (MDI), or the like, and/or HDI mixed with other aliphatic diisocyanate e.g., isophorone diisocyanate (IPDI), dicyclohexylmethane 4,4-diisocyanate (H₁₂MDI), or the like.

The prepolymer is then dispersed in water with a tertiary amine e.g. triethylamine (TEA) or if made in a salt form such as a sodium salt (as exemplified in some of the Examples below) TEA is not necessary. These are considered equivalents. The prepolymer is also chain-modified i.e., chain extended and/or chain terminated. Suitable chain extenders are: ethylenediamine or 1,4-butanediol or ureido diamine (imidazolidinone diamine) or N-isodecyloxypropyl-1,3-diaminopropane (DA-14 from Exxon). Suitable chain terminators are: taurine (2-aminoethanesulfonic acid) or its sodium salt, or ethanolamine or isethonic acid (2-hydroxyethanesulfonic acid) or its sodium salt. Mixtures of the extenders and terminators may also be used as exemplified in some of the Examples below. Chain extenders and chain terminators are herein referred to collectively as chain modifiers.

### Detailed Description of the Invention

In preferred embodiments, the present invention provides aqueous anionic polyurethane dispersions with high crystallization rates, low heat activation temperature and high green strength. These aqueous anionic polyurethane dispersions are stable at low pH (e.g. 5-7). Also these aqueous polyurethane dispersions exhibit a high degree of compatibility not only with other water-based polymers (e.g. vinyl acetate emulsion), but also with crosslinking agents (e.g. Bayer/Miles' Desmodur DA). These aqueous polyurethane dispersions also have high heat resistance after curing or blending with a crosslinker.

### HIGH CRYSTALLIZATION RATE POLYURETHANE DISPERSIONS

Polyurethane generally consists of a hard segment (isocyanate and chain extender) and a soft segment (polyol). European Pat. 0 344 912 A3 and WO 92/02568 disclose that the crystallization of polyurethane dispersions depends on the structure, composition and molecular weight of the polyol component. It would therefore seem from the prior art that crystallization rate does not depend on the hard segment crystallization but on the soft segment crystallization.

Unexpectedly, it has been found in the compositions of the present invention that the crystallization rate of these polyurethane dispersions depends on the structure of the diisocyanate (hard segment).

Such polyurethane dispersions according to the invention include, in some embodiments, polyester polyol, for example Rucoflex 105-55 (a hexanediol adipate polyol, Eq.wt. 996, available from Ruco Polymer Corporation), dimethylol propionic acid (DMPA), hexamethylene diisocyanate (HDI), tetramethylxylylene diisocyanate (TMXDI), Triethylamine (TEA) if not in salt form, and ethylene diamine/ethanolamine (EDA/EA). The crystallization rates of several compositions lacking the sulfonated polyester component in the NCO-prepolymer are shown in Table 1.

**Table 1.**

| Crystallization Rate and Ratio of HDI/TMXDI | | | |
|---|---|---|---|
| TMXDI/HDI (Molar) | DSC First Run Heat (Cal./G) | DSC Second Run Heat (Cal./G) | Cry.Rate* (%) |
| 1/0 | 12.6 | 0 | 0 |
| 0.8/0.2 | 17.4 | 0.4 | 2.3 |
| 0.5/0.5 | 10.79 | 6.15 | 57.0 |
| 0.4/0.6 | 15.9 | 9.95 | 62.6 |
| 0.33/0.66 | 11.4 | 8.4 | 73.7 |
| 0/1 | 10.5 | 8.5 | 80.1 |
| NP-4041 (H.B. Fuller PUD based on TMXDI and butanediol adipate polyol and EDA/EA/DETA (diethylene-driamine) chain extender | 11.5 | 0 | 0 |
| KA-8464 | 13.7 | 10.1 | 73.7 |
| (Bayer/Miles PUD based on HDI/IPDI and polyester polyol) | 16.5 | 11.4 | 69.1 |

| | | | |
|---|---|---|---|
| * Crystallization rate = DSC Second Run Heat/DSC First Run Heat DSC testing: The samples were heated from -40 to 140 °C at 10 °C min. The resulting thermographies are "first Run". The samples were then quench cooled and reheated at 10 °C/min to produce the "Second Run" thermographies. | | | |

The crystallization rates of PUDs based only on TMXDI (e.g. NP-4041) and based only on HDI were 0 and 80%, respectively as seen in Table 1. The crystallization rate of KA-8464 as shown in Table 1 was about 70%, close to that of a PUD based on a 2/1 molar ratio of HDI/TMXDI, but KA-8464 is based on HDI/IPDI.

From this it can be seen that aqueous polyurethane dispersions based on HDI and its mixtures with other diisocyanate may, according to the invention, be synthesized with varying crystallization rates, depending on the ratio of HDI to the other diisocyanate(s). The ratio may range from 100/0 to 0/100 by weight, preferably from 100/0 to about 50/50.

Bauriedel et al., PCT/EP92/00560 (26/11/92) (DE 40 24567 A1), disclose aqueous polyurethane dispersions based on one isocyanate component consisting of at least 20% by weight TMXDI, and other diisocyanates (HDI, IPDI, XDI, TMDI, TDI, MDI and H₁₂MDI). TMXDI, at least 20% by weight in its mixture with other diisocyanate(s) is used to decrease the prepolymer viscosity made from the diisocyanate mixture, so a low solvent or even a solvent free process can be used to prepare the prepolymer of the patent.

In the present invention, however, TMXDI in its mixture with HDI is used to adjust the crystallization rate of the resulting polyurethane dispersions because the amount of TMXDI used was unexpectedly found to be inversely proportional to the crystallization rate of the resulting polyurethane dispersions. The use of smaller amounts of TMXDI down to zero produces a higher crystallization rate.

It was also unexpectedly found, according to the invention, that the crystallization rate of the polyurethane dispersions of the invention also depends on the ratio of chain extender, e.g.ethylene diamine (EDA) to the chain terminator, e.g. ethanolamine (EA) used. The crystallization rate for several compositions lacking the sulfonated polyester component in the NCO-prepolymer are shown in Table 2.

**Table 2.**

| Crystallization Rate and Ratio of EDA/EA | | | |
|---|---|---|---|
| PUD Samples | #4133-7 | #4133-8 | #4133-9 |
| Rucoflex 105-55 (hexanediol adipate polyol Eq. Wt. 996) | 64.38 | 65.59 | 66.41 |
| DMPA | 4.35 | 4.39 | 4.45 |
| TEA | 6.22 | 6.29 | 6.37 |
| TMXDI | 8.54 | 8.64 | 8.75 |
| HDI | 11.44 | 11.57 | 11.71 |
| EA | 4.59 | 2.36 | 0.43 |
| EDA | 0 | 1.16 | 1.88 |
| Crystallization Rate (%) | 64.64 | 75.96 | 84.18 |

In Table 2, PUD samples #4133-7, #4133-8 and #4133-9 have nearly same contents of DMPA, TEA, TMXDI and HDI, but different ration of EDA/EA in their compositions. These samples exhibited much different crystallization rates.

Therefore, the synthesis aqueous polyurethane dispersions with high crystallization rate depends not only on ratio of HDI to other diisocyanate, but also on ratio of chain extender to chain terminator. The ration may vary from a chain extender/chain terminator ration of 100/0 to 0/100, preferably from about 50/50 to about 100/0 by weight.

Examples of useful chain extenders include aliphatic, cycloaliphatic, and aromatic diamines, like ethylenediamine, hexamethylenediamine, 1,4-cyclohexylenediamine, piperazine, N-methylpropylenediamine, diaminophenylsulfone, diaminodiphenylether, diaminodiphenyldimethylmethane, 2,4-diamino-6-phenyltriazine, isophoronediamine, dimer fatty acid diamine, N-isodecycloxy propyl-1,3-diaminopropane (DA-14), imidazolidinone diamine (urcido diamine).

Examples of useful chain terminators include aminoalcohols, like ethanolamine, propanolamine, butanolamine, N-methylethanolamine, N-methylisopropanolamine, taurine and isethionic acid.

### HEAT ACTIVATION AND GREEN STRENGTH

In heat activation process, the polyurethane dispersion adhesive is applied to the substrate and after complete evaporation of water the layer of adhesive applied is converted into an adhesive state by the action of heat. Good adhesives should exhibit low heat activation temperature and high green strength.

Generally, polyurethane adhesive having high crystallization rate should have low heat activation temperature and high green strength. U.S.Pat. 4,870,129 discloses that polyurethane dispersions based on HDI/IPDI exhibited low activating temperature and high heat resistance.

Unexpectedly, it has been found that polyurethane dispersions of the invention based on mixtures of HDI with other diisocyanates do not always have low activating temperature and high heat resistance. Heat activation temperature and green strength not only depend on crystallization rate, but also depend on molecular weight of polyurethane. In this invention, it has been found that polyurethane dispersions based on molar ratios* of HDI/TMXDI greater than 2/1 have high a crystallization rate, but have much different heat activating temperature and green strength. The results are shown in Table 3 for several compositions.
*In terms of wt, the molar ratio is: HDI/TMXDI
2/1 (molar ratio) = (2/84)/(1/122) (weight ratio)
= 3/1 (weight ratio).

The samples #37, #44 and #48 in tables 3 and 4 are sulfonated polyester polyol components only.

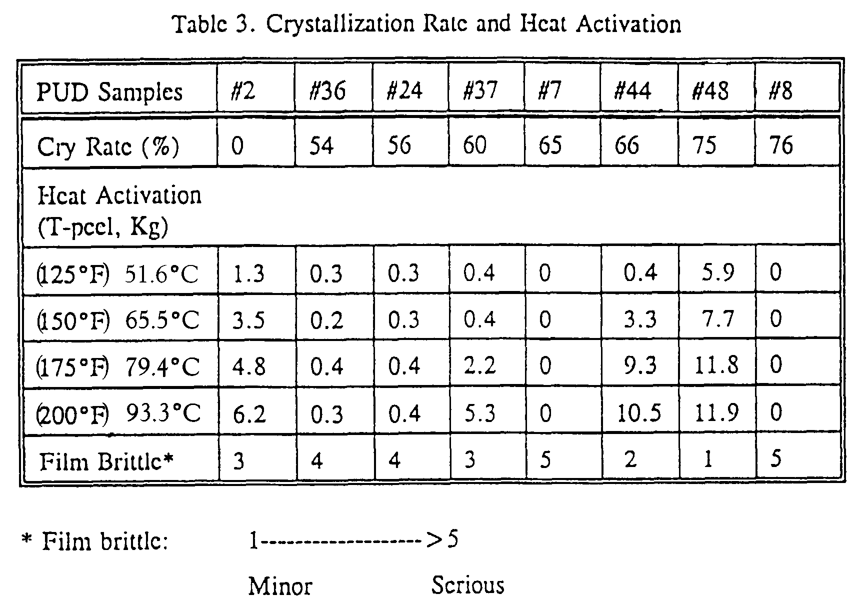

**Table 4.**

| Compositions for samples in Table 3 | | | | |
|---|---|---|---|---|
| PUD Samples | HDI/TMXDI (Mol %) | EDA/EA (Mol %) | Cry. Rate (%) | Film Brittle |
| #2 | 0/100 | 50/50 | 0 | 3 |
| #24 | 67/33 | 50/50 | 54 | 4 |
| #37 | 67/33 | EA/Taurine | 56 | 4 |
| #7 | 67/33 | 0/100 | 65 | 5 |
| #44 | 83/17 | 100/0 | 66 | 2 |
| #48 | 83/17 | 80/20 | 75 | 1 |
| #8 | 67/33 | 50/50 | 76 | 5 |

In view of the results shown above, it can be seen that the present invention provides aqueous polyurethane dispersions which have low heat activating temperature and high heat resistance based on HDI and its mixture with other diisocyanate (crystallization rate), and EDA and its mixtures with chain terminators (crystallization rate and molecular weight).

Surprisingly, it was found that carboxylated polyurethane prepolymers with high crystallization rate and low heat activation temperature based on HDI or HDI mixture with other diisocyanate, polyester polyol and DMPA cannot be dispersed into water. A large particle size dispersion with precipitation always occurs.

On the other hand, when sulfonated polyurethane dispersions of the invention with high crystallization rate and low heat activation temperature were prepared (sulfonic acid is a stronger acid in comparison with carboxylic acid) the dispersions were found to have higher solubility in water in comparison with carboxylic acid based dispersions.

### STABILITY AT LOW PH

Usually cationic and nonionic polyurethane dispersions have low pH (less than 7) stability, and anionic polyurethane dispersions are stable only at higher pH (greater than 7).

U.S.Pat. 4,870,129 discloses that sulfonated polyurethane dispersions can be stable at a pH of 5-7. A sodium salt of N-(-2 aminoethyl)-2-aminoethane sulphonic acid (AAS salt) was used as a chain extender to prepare the sulfonated polyurethane dispersions. A prepolymer containing sulfonate groups could not be prepared by this process. In addition, a large quantity of acetone was used to dilute the non-sulfonated prepolymer before adding the sulfonate diamine chain extender due to the high reactivity of the sulfonate diamine with diisocyanate.

Another U.S.Pat. 4,108,814 uses sulfonate diols (sulfonated polyether polyols) to prepare sulfonated polyurethane dispersions. These sulfonate diols were used to prepare prepolymers containing sulfonate groups, but these sulfonate diols contain ether bonds which should decrease the crystallization of the resulting polyurethane dispersions.

In the present invention, however, new sulfonated polyester polyols were used to synthesize sulfonated aqueous polyurethane dispersions. Sulfonated polyester polyols were prepared from diacids, diols and sulfonate diacids and/or sulfonate diols. Aromatic and aliphatic sulfonate diacids and diols were used, and comprised 1-10% content of the resulting sulfonated polyester polyols.

Preferred sulfonated polyester polyols have melting points between 30° C and 80° C, most preferred between 40° C and 60° C. Especially preferred are sulfonated polyester polyols prepared by reacting sulfonate diacids or diols with short chain diols and short chain diacids or derivatives of diacids.

Examples of useful diols include ethylene glycol or condensates of ethyleneglycols, butanediol, butenediol, propanediol, neopentylglycol, hexanediol, 1,4-cyclohexane dimethanol, 1,2-propylene glycol and 2-methyl-1,3-propanediol.

Examples of useful diacids include adipic, azelaic, succinic, suberic acids, and phthalic acid.

Examples of useful sulfonate diacids and diols include sulfoisophthalic acid (and sodium salt), sulfossucinic acid (and sodium salts), 1,4-dihydroxybutane sulfonic acid (and sodium salt) and succinaldehyde disodium bisulfite.

Examples of commercially available sulfonated polyester polyols that are useful in the compositions of the invention are the "Rucoflex XS" series made by Ruco Polymer Corporation for H.B. Fuller. Rucoflex XS-5483-55 and Rucoflex XS-5536-60 are sulfonated polyester polyols based on 5-sulfoisophthalic acid monosodium salt (4 wt. % in XS-5483-55, and 6 wt. % in XS-5536-60), 1,6--hexanediol and adipic acid. See Table 5 below. 5-sulfoisophthalic acid monosodium salt is a cheaper key raw material for preparing aqueous sulfonated polyurethane dispersions compared with the sodium salt of N-(2-aminoethyl)-2-aminoethane sulfonic acid as used in U.S. Patent 4,870,129. It contains an aromatic ring which will increase the heat resistance of the final resulting sulfonated polyurethane adhesives.

**Table 5.**

| Composition of Rucoflex SX-5484-55 and SX-5536-60 | | |
|---|---|---|
| Rucoflex | adipic acid and 1,6-hexane diol | 5-sulfoisophthalic acid monosodium salt |
| XS-5483-55 | 95% | 4% |
| XS-5536-60 | 94% | 6% |

In accordance with this invention, the sulfonated polyester polyol selected was reacted with HDI or mixture of HDI with other diisocyanate at 70-90°C for 2-7 hours to prepare a prepolymer containing sulfonate groups. The prepolymer was dispersed into water, finally chain extended by EDA for example and/or chain terminators (e.g. EA).

Surprisingly, the reaction between the sulfonated polyester polyol and HDI (or mixture of HDI and other diisocyanate) was found to be quite rapid. The reaction was carried out at 70-80°C just for 3-10 minutes, and the reactant became a semi-solid or even a solid, which was difficult to dissolve into acetone.

Therefore, an acetone process was used to prepare the sulfonate containing prepolymer. The sulfonated polyester polyol was dehydrated in a vacuum at 100°C. Acctone was added to dissolve it at 70-80°C, and HDI and other diisocyanate (e.g. TMXDI) were then added. The reaction was carried at 80-90°C for 3-5 hours. After dispersing and chain extension, the acetone was then immediately distilled off. About half the amount of acetone used in U.S. Pat. 4,870,129 was used in this process.

The resulting sulfonated aqueous polyurethane dispersions possess stability at a low pH (5-7), in addition to high crystallization rate and low heat activation temperature. They have good compatibility with other water-based polymers (e.g. vinyl acetate emulsion), and crosslinker (e.g. Bayer/Miles' Desmodour DA). The resulting adhesives exhibit high heat resistance.

### EXAMPLES

The invention is further illustrated, but is not intended to be limited by the following examples in which all parts and percentages are by weight unless otherwise specified.

### Determination of Crystallization Rate

DSC is used to measure the crystallization rate. The film samples made from aqueous polyurethane dispersion are heated from -40 to 140°C at 10°C/minute. The resulting thermographies are "first run". The samples are then quench cooled and reheated at 10°C/minute to produce the thermographies are "second run".

Crystallization rate = DSC second run melting heat/ DSC first run melting heat. The results are shown in Table 4.

### Heat Activation Testing

Drawdown polyurethane dispersion on a 10 mil clear PVC (polyvinyl chloride film from Laird Plastics) with a #28 mylar rod. Dry to touch and cut into 1x6 inch strips. Seal the strips to uncoated 10 mil clear PVC using a Sentinal Heat Sealer at 344,7·10³ Pa (50 psi) nip pressure with a 30 second dwell time. Begin sealing at 51.6°C (125°F), increasing the temperature 13.85°C (25°F) increments to 93.3°C (200°F). Allow laminates to age 15 minutes and determine peel strength at 30,5 cm (12 inches) per minute on an Intelect 500. The results are shown in Table 6 below for the following Examples.

### Example 1

229 g. Rucoflex XS-5483-55 (a sulfonated polyester polyol based on 5-sulfoisophthalic acid monosodium salt, adipic acid and 1,6-hexanediol, OH number 49.0) is dried in vacuo at 100°C. and then dissolved into 250 ml. acetone at 70-80°C. 21 g. 1,6-hexane-diisocyanate (HDI) and 6.1 g. tetramethylxylylene diisocyanate (TMXDI) are added, whereupon the temperature is maintained at about 85° C. for 5 hours and then cooled to about 50°C. At this temperature, the prepolymer is dispersed by adding 389 g. water, and then chain extended by adding 2.4 g. ethylenediamine (EDA) and 1.22 g. ethanolamine (EA). The acetone is then immediately distilled off.

A finely divided dispersion having a solids content of 40.7%, viscosity of 115 mPas (115 cps), particle size of 226 nm and a pH of 11.2 is obtained.

### Example 2

343.5 g. Rucoflex XS-5483-55 is dried in vacuo at 100°C. and then 250 ml acetone, 30.24 g. HDI and 0.18 g. T-12 (dibutyltin dilaurate) are added into it at 70-80°C, whereupon the temperature is maintained at 80°C. for 2 hours. 10.98 g. TMXDI and 5.02 g. DMPA (dimethylolpropionic acid) is added, keep the temperature at 85°C. for another 3 hours. During the reacting, additional 300 ml acetone is added to control the viscosity of the reactant. The temperature is cooled to about 50°C, 600 g. water is added to disperse the prepolymer, 5 minutes later 2.25 g. EDA (in 30 g. acetone) is added. The acetone is then immediately distilled off.

A finely divided dispersion having a solids content of 39.3%, viscosity of 50 mPas (50 cps) and a pH of 6.41 is obtained.

### Example 3

229 g. Rucoflex XS-5483-55 is dried in vacuo at 100°C. and then 0.09 g. T-12, 250 ml acetone and 21.0 g. HDI are added into it at 80°C. After maintaining at 80°C. for 2 hours, 6.1 g. TMXDI and 150 ml acetone are added, and keep the temperature at 85-90°C for another 3 hours. The temperature is cooled to about 50°C, 0.61 EA (ethanolamine) and 339 g. water first and then 2.7 g. EDA are added into the prepolymer acetone solution. The acetone is then immediately distilled off.

A finely divided dispersion having a solids content of 40.14%, viscosity of 420 mPas (420 cps) and a pH of 11.5 is obtained.

### Example 4

229 g. Rucoflex XS-5483-55 is dried in vacuo at 100°C. and then 0.09 g. T-12, 1.0 g. DMPA, 22.58 g. HDI and 250 ml acetone are added at 80°C. After maintaining at 80°C for 2 hours, 6.56 g. TMXDI is added, and keep at 85-90°C for another 3 hours. The temperature is cooled to about 50°C, 393.5 g. water, 1.64 g. EA and 0.61 g. EDA (in 30 g. acetone) are added. The viscosity of the resulting dispersion is too high, additional 50 g. water is added. The acetone is then immediately distilled off.

A finely divided dispersion having a solids contents of 35.16%, viscosity of 95 mPas (95 cps), particle size of 154 nm and a pH of 7.6 is obtained

### Example 5

229 g. Rucoflex XS-5483-55 is dried in vacuo at 100°C, and then 1.34 g. DMPA, 0.09 g. T-12, 23.1 g. HDI, 2.69 g. TMXDI and 250 ml acetone are added at 85°C. After maintaining at 85°C for 5 hours, the temperature is cooled to about 50°C, then 387 g. water, 0.7 g. EA and 1.62 g. EDA (in 50 g. water) are added into the prepolymer. The acetone is then immediately distilled off.

A finely divided dispersion having a solids contents of 35.5%, viscosity of 515 mPas (515 cps), and a pH of 8.09 is obtained.

### Example 6

229 g. Rucoflex XS-5483-55 is dried in vacuo at 100°C and then 1.34 g. DMPA, 23.1 g. HDI, 2.69 g. TMXDI, 0.09 g. T-12 and 250 ml acetone are added at 85°C. After maintaining at 85°C for 5 hours, the temperature is cooled to about 50°C, then 386.98 g. water and 1.85 g. EDA are added into the prepolymer. The viscosity of the resulting dispersion is too high, additional 100 q. water is added. The acetone is then immediately distilled off.

A finely divided dispersion having a solids content of 36.32%, viscosity of 104 mPas (104 cps), particle size of 117 nm and a pH of 7.45 is obtained.

### Example 7

229 g. Rucoflex XS-5483-55 is dried in vacuo at 100°C, and then 0.09 g. T-12, 21.0 g. HDI and 450 ml acetone are added at 80°C. After maintaining at 80°C for 2 hours, 9.76 g. TMXDI is added, and the reaction is carried out at 85-90°C for another 3 hours. After the temperature is cooled to about 50°C, 397 g. water, 2.38 g. EA and 2.73 g. EDA (in 30 g. acetone and 20 g. water) are added into the prepolymer. The acetone is then immediately distilled off.

A finely divided dispersion having a solids content of 35.75%, viscosity of 300 mPas (300 cps), particle size 198 nm and a pH of 10.95 is obtained.

### Example 8

114.5 g. Rucoflex XS-5483-55 and 50 g. Rucoflex S-102-55 (1-6 butanediol adipate polyester polyol, OH No. 55) and 6.7 g. DMPA are dried in vacuo at 100°C, then 17.64 g. HDI, 9.6 g. TEA (triethylamine) and 50 ml acetone are added at 75°C. After maintaining at 80°C for 2 hours, 12.2 g. TMXDI is added, and the reaction is carried out at 85-90°C for another 3 hours. The temperature is cooled to about 50°C, 100 ml acetone is added, then 568.7 g. water and 1.8 g. EDA (in 35 ml acetone) are added into the prepolymer. After distilling acetone off, a finely divided dispersion is obtained.

### Comparative Example 9

200 g. Rucoflex S-102-55 (Ruco's polyester polyol based on butanediol adipate, OH number 55.0) is dried in vacuo at 100°C, and then 20.1 g. DMPA, 34.8 g. HDI and 14.4 TEA are added at 70°C. After maintaining at 80°C for 2 hours, 24.4 g.TMXDI is added, the reaction is carried out at 90-100°C for another 3 hours. The temperature is cooled to 70°C, 150 ml acetone is added, and then 6.25 g. taurine and 4.58 g. EA in 790 g. water are added into the prepolymer. After distilling acetone off, a finely divided dispersion is obtained.

### Example 10

181 g. Rucoflex XS-5536-60 (a sulfonated polyester polyol based on 5-sufoisophthalic acid monosodium salt (6%), adipic acid and 1,6-hexanediiol, OH number 61.9) is dried in vacuo at 100° C, and then 1.0 g. DMPA, 0.08 g. T-12, 22.58 b. HDI and 200 ml acetone are added at 80° C. After maintaining at 80° C for 2 hours, 6.50 g. TMXDI is added, the reaction is carried out at 85-90° C for another 3 hours. After the temperature is cooled to about 50° C, 422 g. water with 1.68 g. EA and 1.61 g. EDA are added into the prepolymer. The acetone is then immediately distilled off.

A finely divided dispersion having a solids content of 26.10%, viscosity of 60 mPas (60 cps) particle size 41 nm and a pH of 7.63 is obtained.

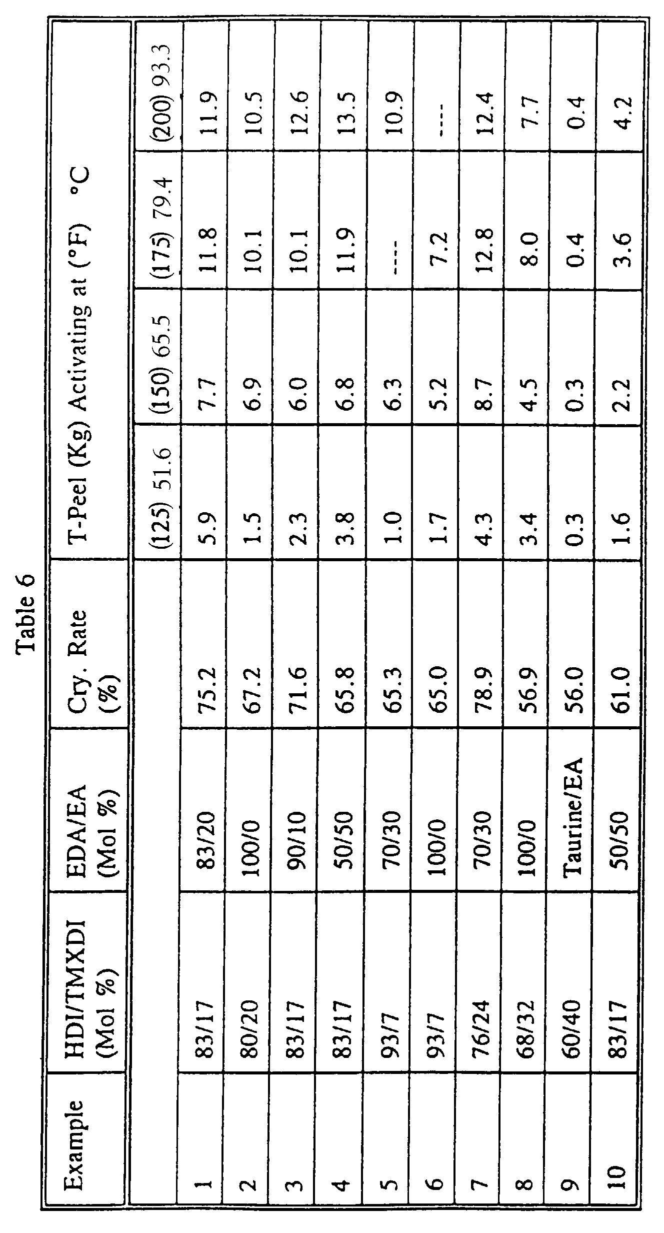

While this invention may be embodied in many different forms, there are described in detail herein specific preferred embodiments of the invention. This description is an exemplification of the principles of the invention and is not intended to limit the invention to the particular embodiments illustrated.

The above Examples and disclosure are intended to be illustrative and not exhaustive. These examples and description will suggest many variations and alternatives to one of ordinary skill in this art. All these alternatives and variations are intended to be included within the scope of the attached claims. Those familiar with the art may recognize other equivalents to the specific embodiments described herein which equivalents are also intended to be encompassed by the claims attached hereto.

## Claims

1. A stable aqueous dispersion of an anionic polyurethane polymer, the polyurethane polymer comprising the reaction product in aqueous dispersion of an isocyanate terminated polyurethane prepolymer and at least one amine functional chain extender compound, wherein
the isocyanate terminated polyurethane prepolymer comprises the reaction product of a polyisocyanate component comprising at least 50% by weight 1,6-hexamethylenediisocyanate, with a polyol component, the polyol component providing both carboxylate groups and sulfonate groups and comprising:
at least one sulfonated polyester polyol; and
dimethylol propionic acid;
the carboxylate and sulfonate groups of said isocyanate prepolymer are neutralized with a tertiary amine prior to, or simultaneous with, said reaction of said prepolymer and said amine functional chain extender.

2. A dispersion as in claim 1 wherein the polyisocyanate component is hexamethylene diisocyanate (HDI).

3. A dispersion as in claim 1 wherein the polyisocyanate comprises a mixture of HDI and a second diisocyanate.

4. A dispersion as in claim 3 wherein the second diisocyanate is a member of the group consisting of isophorone diisocyanate (IPDI), dicyclohexylmethanediisocyanate (H₁₂MDI), tetramethylxylenediisocyanate (TMXDI), tolylenediisocyanate (TDI) and diphenylmethanediisocyanate (MDI).

5. A dispersion as in claim 3 wherein the second diisocyanate is TMXDI.

6. A dispersion as in claim 1 wherein said sulfonated polyester polyol is a polyester of a sulfonated diacid or sulfonated diol, a non-sulfonated diacid and a non-sulfonated diol.

7. A dispersion as in claim 6 wherein said non-sulfonated diacid is selected from the group consisting of adipic, azelaic, succinic, suberic and phthalic acids.

8. A dispersion as in claim 6 wherein non-sulfonated diol is selected from the group consisting of ethylene glycol. condensates of ethylene glycols, butanediol, butenediol, propanediol, neopentylglycol, hexanediol, 1,4-cyclohexane dimethanol. 1,2-propylene glycol and 2-methyl-1,3-propanediol.

9. A dispersion as in claim 6 wherein the sulfonated diacid or sulfonated diol is selected from the group consisting of sulfoisophthalic acid, sulfosuccinic acid, 1,4-dihydroxybutane sulfonic acid and succinaldehyde disodium bisulfite.

10. A dispersion as in claim 1 wherein the sulfonated polyester polyol has a molecular weight in the range of about 500 to 10,000 and a melting temperature in the range of about 10 to 100°C.

11. A dispersion as in claim 10 wherein said molecular weight range is about 1,000 to 4,000 and the sulfonated polyester polyol has a melting temperature in the range of 40°C to 60°C.

12. A dispersion as in claim 1 wherein the sulfonated polyester polyol is a polyester of 5-sulfoisophthalic acid monosodium salt, 1,6-hexanediol and adipic acid.

13. A dispersion as in claim 1 wherein the sulfonated polyester polyol is a polyester of 5-sulfoisophthalic acid monosodium salt, condensates of ethylene glycols and adipic acid.

14. A dispersion as in claim 1 wherein said amine functional chain extender includes aliphatic, cycloaliphatic and/or aromatic diamines.

15. A dispersion as in claim 14 wherein said amine functional chain extender is a member of the group consisting of ethylenediamine (EDA), piperazine, 1,4-cyclohexyldimethyldiamine, hexamethylenediamine, N-methylpropylenediamine, diaminophenylsulfone, diaminodiphenylether, diaminodiphenyldimethylmethane, 2,4-diamino-6-phenyltriazine, isophoronediamine, dimer fatty acid diamine, N-isodecycloxy propyl-1,3-diaminopropane, and imidazolidinone diamines.

16. A dispersion as in claim 1 wherein said isocyanate terminated prepolymer is reacted with a mixture of at least one of said amine functional chain extender compound of claims 14 to 15 and at least one chain terminator compound, said amine functional chain extender comprising at least 50% by weight of said mixture.

17. A dispersion as in claim 16 wherein said chain terminator is a member of the group consisting of ethanolamine, propanolamine, butanolamine, N-methylethanolamine, N-methyl-isopropanolamine, taurine and isethionic acid.

## Patentansprüche

1. Stabile wäßrige anionische Polyurethanpolymer-Dispersion, wobei das Polyurethanpolymer das Reaktionsprodukt in wäßriger Dispersion eines Isocyanat endständigen Polyurethan-Prepolymers und wenigstens einer eine Aminfunktionalität aufweisenden kettenverlängernden Verbindung umfaßt, wobei das Isocyanat endständige Polyurethan-Prepolymer das Reaktionsprodukt einer Polyisocyanatkomponente, die wenigstens 50 Gew.-% 1,6-Hexamethylendiisocyanat aufweist, mit einer Polyolkomponente umfaßt, wobei die Polyolkomponente Carboxylat und Sulfonatgruppen aufweist, umfassend:
wenigstens ein sulfoniertes Polyesterpolyol; und
Dimethylolpropionsäure;
wobei die Carboxylat und Sulfonatgruppen des Isocyanat-Prepolymers vorher oder gleichzeitig bei der Reaktion des Prepolymers und des Aminfuntionalität aufweisenden Kettenverlängerers mit tertiärem Amin neutralisiert werden.

2. Dispersion nach Anspruch 1, worin die Polyisocyanatkomponente Hexamethylendiisocyanat (HDI) ist.

3. Dispersion nach Anspruch 1, worin das Polyisocyanat eine Mischung von HDI und eines zweiten Diisocyanats umfaßt.

4. Dispersion nach Anspruch 3, worin das zweite Diisocyanat ausgewählt ist aus der Gruppe bestehend aus Isophorondiisocyanat (IPDI), Dicyclohexylmethandiisocyanat (H₁₂MDI), Tetramethylxylendiisocyanat (TMXDI), Toluoldiisocyanat (TDI) und Diphenylmethandiisocyanat (MDI) ist.

5. Dispersion nach Anspruch 3, worin das zweite Diisocyanat Tetramethylxylendiisocyanat (TMXDI) ist.

6. Dispersion nach Anspruch 1, worin das sulfonierte Polyesterpolyol ein Polyester einer sulfonierten Disäure oder einer sulfonierten Diol, eine nicht-sulfonierte Disäure und eines nichtsulfonierten Diol ist.

7. Dispersion nach Anspruch 6, worin die nicht-sulfonierte Disäure ausgewählt ist aus der Gruppe bestehend aus Adipin-, Azelain, Bernstein-, Kork- und Phthalsäure.

8. Dispersion nach Anspruch 6, worin das nicht-sulfonierte Diol ausgewählt ist aus der Gruppe bestehend aus Ethylenglycol, Ethylenglycolkondensaten, Butandiol, Butendiol, Propandiol, Neopentylglycol, Hexandiol, 1,4-Cyclohexandimethanol, 1,2-Propylenglycol und 2-Methyl-1,3-propandiol.

9. Dispersion nach Anspruch 6, worin die sulfonierte Disäure oder das sulfonierte Diol ausgewählt ist aus der Gruppe bestehend aus Sulfoisophthalsäure, Sulfobernsteinsäure, 1,4-Dihydroxybutansulfonsäure und Bersteinsäuredialdehyddinatriumbisulfit.

10. Dispersion nach Anspruch 1, worin das sulfonierte Polyesterpolyol ein Molekulargewicht im Bereich von ungefähr 500 bis 10.000 hat und eine Schmelztemperatur im Bereich von ungefähr 10 bis 100°C besitzt.

11. Dispersion nach Anspruch 10, worin das Molekulargewicht im Bereich von 1.000 bis 4.000 liegt und das sulfonierte Polyesterpolyol eine Schmelztemperatur im Bereich von 40°C bis 60°C besitzt.

12. Dispersion nach Anspruch 1, worin das sulfonierte Polyesterpolyol ein Polyester von 5-Sulfoisophthalsäuremononatriumsalz, 1,6-Hexandiol und Adipinsäure ist.

13. Dispersion nach Anspruch 1, worin das sulfonierte Polyesterpolyol ein Polyester von 5-Sulfoisophthalsäuremononatriumsalz, Kondensaten des Ethylenglycols und Adipinsäure ist.

14. Dispersion nach Anspruch 1, worin der Aminfunktionalität aufweisende Kettenverlängerer aliphatisches, cycloaliphatisches und/oder aromatisches Diamin einschließt.

15. Dispersion nach Anspruch 14, worin der Aminfunktionalität aufweisende Kettenverlängerer ausgewählt ist aus der Gruppe bestehend aus Ethylendiamin (EDA), Piperazin, 1,4-Cyclohexyldimethyldiamin, Hexamethylendiamin, N-Methylpropylendiamin, Diaminophenylsulfon, Diaminodiphenylether, Diaminodiphenyldimethylmethan, 2,4-Diamino-6-phenyltriazin, Isophorondiamin, dimäres Fettsäurediamin, N-Isodecyloxypropyl-1,3-diaminopropan und Imidazolidinondiamine.

16. Dispersion nach Anspruch 1, worin das Isocyanat endständige Prepolymer mit einer Mischung von wenigstens einer Aminfunktionalität aufweisenden kettenverlängernden Verbindung nach den Ansprüchen 14 bis 15 und wenigstens einer Kettenabbruchsverbindung umgesetzt wird, wobei der Aminfunktionalität aufweisende Kettenverlängerer wenigstens 50 Gew.-% der Mischung ausmacht.

17. Dispersion nach Anspruch 16, worin die kettenabbrechende Verbindung ausgewählt ist aus der Gruppe bestehend aus Ethanolamin, Propanolamin, Butanolamin, N-Methylethanolamin, N-Methylisopropanolamin, Taurin und Isethionsäure ist.

## Revendications

1. Dispersion aqueuse stable constituée d'un polymère de polyuréthanne anionique, le polymère de polyuréthanne comportant le produit de réaction en dispersion aqueuse d'un prépolymère de polyuréthanne à terminaison isocyanate et d'au moins une composition aminée de développement de chaîne fonctionnelle, dans laquelle
le prépolymère de polyuréthanne à terminaison isocyanate comporte le produit de réaction d'un composé de polyisocyanate comportant au moins 50 % en poids de 1,6-hexaméthylène diisocyanate, et d'un composé de polyol, le composé de polyol fournissant à la fois des groupes carboxylate et des groupes sulfonate et comportant :
au moins un polyol de polyester sulfoné, et
un acide propionique de diméthylol,
les groupes carboxylate et sulfonate dudit prépolymère d'isocyanate étant neutralisés à l'aide d'une amine tertiaire avant ladite réaction dudit prépolymère et dudit agent aminé de développement de chaîne fonctionnelle, ou simultanément à celle-ci.

2. Dispersion selon la revendication 1, dans laquelle le composé de polyisocyanate est l'hexaméthylène diisocyanate (HDI).

3. Dispersion selon la revendication 1, dans laquelle le polyisocyanate comporte un mélange de HDI et d'un second diisocyanate.

4. Dispersion selon la revendication 3, dans laquelle le second diisocyanate est un élément du groupe constitué du isophorone diisocyanate (IPDI), du dicyclohexylméthane diisocyanate (H₁₂MDI), du tétraméthylxylène diisocyanate (TMXDI), du tolylène diisocyanate (TDI) et du diphénylméthane diisocyanate (MDI).

5. Dispersion selon la revendication 3, dans laquelle le second diisocyanate est TMXDI.

6. Dispersion selon la revendication 1, dans laquelle ledit polyol de polyester sulfoné est un polyester d'un diacide sulfoné ou d'un diol sulfoné, d'un diacide non-sulfoné et d'un diol non-sulfoné.

7. Dispersion selon la revendication 6, dans laquelle ledit diacide non-sulfoné est sélectionné parmi le groupe constitué des acides adipique, azélaïque, succinique, subérique et phtalique.

8. Dispersion selon la revendication 6, dans laquelle le diol non-sulfoné est sélectionné parmi le groupe constitué de l'éthylène glycol, des condensats d'éthylène glycols, du butanediol, du butènediol, du propanediol, du néopentylglycol, de l'hexanediol, du 1,4-cyclohexane diméthanol, du 1,2-propylène glycol et du 2-méthyl-1,3-propanediol.

9. Dispersion selon la revendication 6, dans laquelle le diacide sulfoné ou le diol sulfoné est sélectionné parmi le groupe constitué de l'acide sulfoisophtalique, de l'acide sulfosuccinique, de l'acide sulfonique 1,4-dihydroxybutane et du bisulfite de disodium succinaldéhyde.

10. Dispersion selon la revendication 1, dans laquelle le polyol de polyester sulfoné a un poids moléculaire situé dans la plage allant d'environ 5000 à 10000 et une température de fusion située dans la plage allant d'environ 10 à 100°C.

11. Dispersion selon la revendication 10, dans laquelle ladite plage de poids moléculaires est d'environ 1000 à 4000 et le polyol de polyester sulfoné a une température de fusion située dans la plage allant de 40 à 60°C.

12. Dispersion selon la revendication 1, dans laquelle le polyol de polyester sulfoné est un polyester d'un sel monosodique d'acide 5-sulfoisophtalique, de 1,6-hexanediol et d'acide adipique.

13. Dispersion selon la revendication 1, dans laquelle le polyol de polyester sulfoné est un polyester d'un sel monosodique d'acide 5-sulfoisophtalique, de condensats d'éthylène glycols et d'acide adipique.

14. Dispersion selon la revendication 1, dans laquelle ledit agent aminé de développement de chaîne fonctionnelle comporte des diamines aliphatique, clycloaliphatique et/ou aromatique.

15. Dispersion selon la revendication 14, dans laquelle ledit agent aminé de développement de chaîne fonctionnelle est un élément du groupe constitué d'éthylènediamine (EDA), de pipérazine, de 1,4-cyclohexyldiméthyldiamine, d'hexaméthylènediamine, de N-méthylpropylènediamine, de diaminophénylsulfone, de diaminodiphényléther, de diaminodiphényldiméthylméthane, de 2,4-diamino-6-phényltriazine, d'isophoronediamine, de diamine d'acide gras dimère, de N-isodécycloxy propyl-1,3-diaminopropane, et de diamines d'imidazolidinone.

16. Dispersion selon la revendication 1, dans laquelle ledit prépolymère à terminaison isocyanate est mis à réagir avec un mélange constitué d'au moins une desdites compositions aminées de développement de chaîne fonctionnelle d'amine des revendications 14 et 15, et d'au moins une composition d'agent de terminaison de chaîne, ledit agent aminé de développement de chaîne fonctionnelle constituant 50 % en poids dudit mélange.

17. Dispersion selon la revendication 16, dans laquelle ledit agent de terminaison de chaîne est un élément du groupe constitué d'éthanolamine, de propanolamine, de butanolamine, de N-méthyléthanolamine, de N-méthyl-isopropanolamine, de taurine et acide iséthionique.
